# EUROPEAN PATENT SPECIFICATION

(11) **EP 1 913 075 B1**
(45) Date of publication and mention of the grant of the patent: **17.12.2014**
(21) Application number: 06801151.9
(22) Date of filing: 09.08.2006
(51) Int. Cl.: C08L 21/00, B60C 1/00

(54) **RUBBER COMPOSITIONS CONTAINING IMPROVED TACKIFIERS**
KAUTSCHUKZUSAMMENSETZUNGEN MIT VERBESSERTEN KLEBRIGMACHERN
COMPOSITIONS DE CAOUTCHOUC CONTENANT DES AGENTS DONNANT DU COLLANT AMELIORES

(30) Priority: 09.08.2005 US 706861 P
(43) Date of publication of application: 23.04.2008
(73) Proprietor: ARIZONA CHEMICAL COMPANY, Jacksonville, FL 32246-8225 (US)
(72) Inventor: PILLE-WOLF, Wolfgang, Tervuren (BE)
(74) Representative: Beetz, Tom
(86) International application number: PCT/US2006/031207
(87) International publication number: WO 2007/019561

(56) References cited:
- EP-A- 1 035 164
- EP-A- 1 514 901
- GB-A- 1 486 884

## Description

### Field of the Invention

The invention relates to compositions containing terpene-phenol tackifiers, as well as methods making and using the same.

### Background of the Invention

In rubber technology, particular importance is attached to the assembly of unvulcanized blanks from prefabricated semi-finished products. The adhesion of the semi-finished product determines the cohesion and, above all, the dimensional stability of the "unvulcanized blank". The desired dimensional stability of the material is not guaranteed if the tackiness of the superimposed layers is insufficient. Air pockets are likely to form, on the other hand, if the layers adhere too tightly to one another- when the blank is assembled- resulting in poor fusion of the layers in the vulcanization process. The defects due to deficient autohesion are often not recognized until after vulcanization, and in some cases not until the finished product is in use, with all the economic disadvantages that then entails, like economic loss.

There is little understanding of the workings of the methods applied by those involved in production processes to improve the tackiness of compounds. These methods, which are based for the most part on empirical experience, treat the surface by covering the compound slabs with interleaving film of fabric materials and use resins as so-called tackifier in compounds.

A particular use, among many, of such rubber compositions is for the creation of tires, such as those used in transportation, preferably automobiles. Among the many desirable attributes for tire tread compositions, a great resistance to abrasion is preferred. That is, rubber compositions that easily break down under frictional forces is not desirable because such compositions when used in a tire easily wear resulting in a short life. In addition, it is preferable that tires have very good web and/or dry grip. While dry grip is usually maintained by many rubber compositions, wet grip is not. Rubber compositions having good wet grip, thus improved wet skid resistance, is highly desirable for use in tires. Finally, it is highly desired to create a tire that helps increase the fuel economy in the transportation industry, for example in the automobile industry. One manner in which to increase fuel efficiency into a tire is to create the tire from a rubber composition that "likes" to roll. A rubber composition that "likes" to roll, in other words, has a reduced tendency to resist rolling. If a rubber composition has a reduced tendency to resist rolling, less energy is required to roll the tire. For example, less energy would be required out of the engine of an automobile if the automobile included tires made from, at least in part, rubber compositions that had a reduced tendency to resist rolling.

EP1514901 describes a rubber composition for tires which comprises 100 parts by mass of (A) copolymer (a) which is a styrene-butadiene copolymer, 10 to 200 parts by mass of (B) copolymer (b) which is a hydrogenated styrene-butadiene copolymer and (C) at least one substance selected from resins providing tackiness to the rubber composition and liquid polymers having a weight-average molecular weight of 1,000 to 50,000. This document provides numerous examples of resins and liquid polymers which may be used as component (C). The amount of resin tackifier or liquid polymer (C) may be 10 to 150 parts by mass per 100 parts by mass of a rubber component. Terpene phenol resins are described as one of many possible components (C).

GB1486884 describes the preparation of terpene-phenol resins, generally having a Ring-and-Ball-softening point of 95-97 °C. The resins obtained are described to be compatible with many elastomers and synthetic resins, e.g. natural rubber, SBR rubber, neoprene, polyisobutylene, ethylene/vinyl acetate copolymers, polyamides, polyethylene waxes, naturally-occurring resins, petroleum derived resins, polyterpenic resins, ester-gums and esters of optionally modified rosins. The resins are also described to be useful as adhesives.

While rubber compositions capable of being useful in tires and/or tire tread compositions are known, no such rubber composition having maximized abrasion resistance, maximized wet grip (e.g. wet skid resistance), and minimized resistance to rolling (e.g. maximizing fuel economy) is known to date.

### SUMMARY OF THE INVENTION

An object of the invention relates to a composition containing at least one polymer selected from the group consisting of a rubber polymer or copolymer; and at least one resin.

The present invention relates to a tire tread rubber composition containing at least one polymer selected from the group consisting of a rubber polymer or copolymer; and at least one resin, wherein the resin is a terpene phenol resin having a softening point as determined by Ring & Ball of from 75 to 150°C, and having an OH value of from 5 to 150, wherein the amount of tackifier resin is 0.1 to 9.5 parts per hundred parts of rubber (phr).

Another object of the present invention relates to a composition containing at least one polymer selected from the group consisting of a rubber polymer or copolymer; and at least one resin, wherein the resin is a terpene phenol resin having a softening point as determined by Ring & Ball of from 90 to 130°C.

Another object of the present invention relates to a composition containing at least one polymer selected from the group consisting of a rubber polymer or copolymer; and at least one resin, wherein the resin is a terpene phenol resin having a softening point as determined by Ring & Ball of from 90 to 130°C and the resin has an OH value of from 5 to 150.

Another object of the present invention relates to a composition containing at least one polymer selected from the group consisting of a rubber polymer or copolymer; and at least one resin, wherein the resin is a terpene phenol resin having a softening point as determined by Ring & Ball of from 90 to 130°C and the resin has an OH value of from 30 to 50.

The present invention relates to a tire tread rubber composition containing at least one polymer selected from the group consisting of a rubber polymer or copolymer; and at least one resin, wherein the resin is a terpene phenol resin having an OH value of from 5 to 150.

Another object of the present invention relates to a composition containing at least one polymer selected from the group consisting of a rubber polymer or copolymer; and at least one resin, wherein the resin is a terpene phenol resin having an OH value of from 30 to 50.

Another object of the present invention relates to a composition containing at least one polymer selected from the group consisting of a rubber polymer or copolymer; and at least one resin, wherein the resin is a terpene phenol resin having an OH value of from 30 to 50 and having a softening point as determined by Ring & Ball of from 75 to 150°C.

Another object of the present invention relates to a composition containing at least one polymer selected from the group consisting of a rubber polymer or copolymer; and an effective amount of at least one resin, wherein the resin is a terpene phenol resin having an OH value of from 30 to 50.

Another object of the present invention relates to a composition containing at least one polymer selected from the group consisting of a rubber polymer or copolymer; a filler; and an effective amount of at least one resin, wherein the resin is a terpene phenol resin having an OH value of from 30 to 50.

The present invention relates to a tire tread rubber composition wherein the amount of resin is 0.1 to 9.5 parts of resin per hundred parts of rubber (phr).

Another object of the present invention relates to a composition containing at least one polymer selected from the group consisting of a rubber polymer or copolymer; a filler selected from the group consisting of silica, alumina, and carbon black; and an effective amount of at least one resin, wherein the resin is a terpene phenol resin having an OH value of from 30 to 50.

Another object of the present invention relates to a composition containing at least one polymer selected from the group consisting of a rubber polymer or copolymer; a coupling agent; and an effective amount of at least one resin, wherein the resin is a terpene phenol resin having an OH value of from 30 to 50.

Another object of the present invention relates to a composition containing at least one polymer selected from the group consisting of a rubber polymer or copolymer; a coupling agent containing silane; and an effective amount of at least one resin, wherein the resin is a terpene phenol resin having an OH value of from 30 to 50.

Another object of the present invention relates to a composition containing at least one polymer selected from the group consisting of a rubber polymer or copolymer; and an effective amount of at least one resin, wherein the resin is a terpene phenol resin having an OH value of from 30 to 50 and the composition has an abrasion resistance as measured the DIN Abrasion method ISO37 of from 80 to 100 mm³.

Another object of the present invention relates to a composition containing at least one polymer selected from the group consisting of a rubber polymer or copolymer; and an effective amount of at least one resin, wherein the resin is a terpene phenol resin having an OH value of from 30 to 50 and the composition has an abrasion resistance as measured the DIN Abrasion method ISO37 of from 80 to 100 mm³, a tanδ at 70°C of 0.129 or less, and a tanδ at 20°C of 0.205 or more.

Another object of the present invention relates to a composition containing at least one polymer selected from the group consisting of a rubber polymer or copolymer; and an effective amount of at least one resin, wherein the resin is a terpene phenol resin having an OH value of from 30 to 50 and the composition has an abrasion resistance as measured the DIN Abrasion method ISO37 of from 80 to 100 mm³; a tanδ at 70°C that is at least at least 5%less than the tanδ at 70°C of a composition not containing any resin; and has a tanδ at 20°C that is at least 5% greater than the tanδ at 20°C of a composition not containing any resin.

Another object of the present invention relates to a tire containing any one or more of the objects mentioned above.

Another object of the present invention relates to a tire containing a tread composition wherein the tread composition contains at least one rubber polyer, at least one rubber copolymer, or mixtures thereof, and an effective amount of at least one terpene phenol resin having a softening point as determined by Ring & Ball of from 90 to 130°C and having a OH value of from 30 to 50; the tread composition having an abrasion resistance as measured by the DIN Abrasion method ISO37 of from 80 to 100 mm³, a tanδ at 70°C of 0.129 or less, and a tanδ at 20°C of 0.205 or more, wherein the tire has a reduced resistance to rolling and an increased wet skid resistance.

Another object of the present invention relates to a tire containing a tread composition wherein the tread composition contains at least one rubber polyer, at least one rubber copolymer, or mixtures thereof, and an effective amount of at least one terpene phenol resin having a softening point as determined by Ring & Ball of from 90 to 130°C and having a OH value of from 30 to 50; the tread composition having an abrasion resistance as measured the DIN Abrasion method ISO37 of from 80 to 100 mm³; a tanδ at 70°C that is at least at least 5%less than the tanδ at 70°C of a composition not containing any resin; and has a tanδ at 20°C that is at least 5% greater than the tanδ at 20°C of a composition not containing any resin, wherein the tire has a reduced resistance to rolling and an increased wet skid resistance.

The above objects and further objects such as methods of making and using the above objects are described hereinbelow. While the detailed description discussed below is meant to represent the specific objects and embodiments of the invention, they are meant to me non-limiting in so far as to exemplify the present invention.

### BRIEF DESCRIPTION OF THE DRAWINGS

Figure 1: A graph of the tanδ as a function of temperature for various compositions of the present invention containing resins as compared to a composition according to the prior art containing Koresin.
Figure 2: A graph of tan ð as a function of temperature of compositions of the present invention containing no resin (reference), terpene phenol resin TP115 and TP300.
Figure 3:- A graph of tan ð as a function of temperature of tread compounds containing no resin (reference), a terpene phenolic resin TP2019 and a terpene phenolic resin TP2040HME.

### DETAILED DESCRIPTION OF THE INVENTION

This application is related to the fields of chemistry and rubber sciences which is described, for example, Harry Barron's "Modern rubber chemistry" (1948), Chemical Pub. Co, and Edward William Duck's "Plastics and rubbers, (Chemistry in modern industry series)", (1971), Butterworths, and J. A Brydson's "Rubber chemistry", (1978), Applied Science Publishers.

The inventor has surprisingly discovered a tackifier that, when applied to rubber containing compositions, improves the mechanical strength, tear resistance, and vulcanization thereof, without significantly diminishing other important physical characteristics important for end-use applications of rubber compositions. Further, the inventors have discovered a rubber composition containing a tackifier at effective amounts that maximize abrasion resistance, maximize wet grip (e.g. wet skid resistance), and minimize resistance to rolling (e.g. maximizing fuel economy), as well as tires and tire tread compositions containing the same.

The present invention relates to a tire tread rubber composition and a tire comprising the same. Methods of making the composition, and methods of using the composition are also described. The composition is a rubber containing composition. The rubber containing composition is preferably useful in tire production. Examples of rubber compositions useful in tire production can be found in United States Patent Nos. 4,487,892; 5,877, 249; 6,790,889; 6,525,118; 6,384,118; 6,384,117; 6,369,138; 6,348,531; 6,342,552; 6,228,908; 6,221,943; 6,180,710; and 5,994,448, as well as RCT published application WO2004013220 and WO2004013221 and United States Published Patent Application Number 2006/0167160.

Although the rubber composition may be utilized for any article, preferably that article is a tire. Examples of such tires include, but are not limited to, tires useful in the transportation industry. Examples of such tires include those useful in the automobile industry. Further examples include tires such as pneumatic tires.

The composition of the present invention, when used to create the tire of the present invention, may be used to create the entire tire and/or just a portion thereof. For example, the rubber composition may be used to create the tire tread composition. Accordingly, the present invention further relates to a tire containing the rubber composition of the present invention. Any one or more parts of the tire may contain the rubber composition, including the tire tread.

The compositions according to the present invention contains a resin. The resin preferably provides tackiness to the composition. Thus the resin may function as a tackifier and/or a tackifying agent.

The resin is a terpene-phenol resin.

Examples of terpene phenol resins can be found in USP Nos. 6,900,274; 6,562,888; 6,160,083; 5,854,367; 5,789,474and 5,457,175; as well as United Stated Published Patent Application Numbers 20050054801 and 20030229178. Commercial product include those terpene-phenolic resins, but are not limited to, sold by Arizona Chemical Company,such as: SYLVARES TP105; SYLVARES TP95; SYLVARES TP115; SYLVARES TP300; SYLVARES TP2019; SYLVARES TP2040HME; and SYLVARES TP.

The composition contains an amount of 0,1 - 9,5 phr of resin. The amount of the tackifier may be at least 0.1 phr, preferably at least 0.5 phr, more preferably at least 1 phr, most preferably at least 2 phr. The amount of tackifier may be 0.1, 0.2, 0.5, 1, 1.5, 2, 2.5, 3, 3.5, 4, 4.5, 5, 5.5, 6, 6.5, 7, 7.5, 8, 8.5, 9, and 9.5 phr, including any and all ranges and subranges therein.

The resin has a softening point, as determined by Ring & Ball, of from 75 to 150°C, preferably from 85 to 135 °C, most preferably from 90 to 130 °C. Therefore, the softening point is preferable less than 150°C and greater than 75 °C. The softening point may be 75, 80, 85, 90, 95, 100, 105, 110, 115, 120, 125, 130, 135, 140, 145, and 150°C, including any and all ranges and subranges therein.

The resin is a terpene-phenol resin. Examples of the terpene-phenol resin include commercial products (shown by the trade names) such as YS POLYSTAR T115, T145, S145, G150 and N125 of the YS POLYSTAR series manufactured by YASUHARA CHEMICAL Co., Ltd. Further examples include SYLVARES TP105; SYLVARES TP95; SYLVARES TP115; SYLVARES TP300; SYLVARES TP2019; SYLVARES TP2040HME; SYLVARES TP manufactured by Arizona Chemical Company.

The terpene-phenol resin may have any softening point mentioned above as determined by Ring & Ball. In particular, it may have a softening point less than 150°C, preferably less than 140°C, more preferably less than 130 °C, and most preferably less than 120 °C. Further, when the resin is a terpene-phenol resin, it may have a softening point greater than 75 °C, preferably greater than 80 °C, more preferably greater than 90 °C, most preferably greater than 95 °C. When the resin is a terpene-phenol resin, the softening point may be 75, 80, 85, 90, 95, 100, 105, 110, 115, 120, 125, 130, 135, 140, 145, and 150°C, including any and all ranges and subranges therein.

The terpene-phenol resin has a OH value that is less than 150, preferably less than 100, more preferably less than 85, most preferably less than 50. The terpene-phenol resin has a OH value that is greater than 5, preferably greater than 10, more preferably greater than 20, most preferably greater than 30. The terpene-phenol resin has a OH value that is 5, 10, 15, 20, 25, 30, 35, 40, 45, 50, 55, 60, 65, 70, 75, 80, 85, 90, 95, 100, 110, 120, 130, 140 and 150, including any and all ranges and subranges therein.

The composition of the present invention may contain a rubber polymer or copolymer. The rubber or elastomer may be present in the composition at any amount. The amount of rubber or elastomer may be not more than 99wt% and not less than 30wt%, preferably not more than 90wt% and not less than 40wt%, more preferably not more than 85wt% and not more than 45wt%, most preferably not more than 80wt% and not less than 50wt%, based upon the total weight of the composition. The composition may contain 30, 35, 40, 45, 50, 55, 60, 65, 70, 75, 80, 85, 90, 95 and 99wt% of rubber or elastomer based upon the total weight of the composition, including any and all ranges and subranges therein.

The rubber polymer or copolymer may be any rubber polymer or copolymer, including compounding combinations thereof. The rubber polymer or copolymer may be any rubber, especially those used in compositions generally known to make tires for the transportation industry, more especially the automobile industry. Examples of the rubber polymer or copolymer, while being non-limiting, are styrene butadiene rubber, polybutadiene rubber, natural rubber, halogenated butyl rubber, butyl rubber, polyisoprene rubber, and styrene/isoprene/butadiene terpolymer rubbers.

Examples of a styrene butadiene rubber are those copolymers containing any amount of styrene. For example the styrene butadiene rubber may. contain greater or less than 50% by weight of styrene. When the composition contains a styrene butadiene copolymer, the styrene butadiene rubber may contain 5, 10, 15, 20, 25, 30, 35, 40, 45, 50, 55, 60, 65, 70, 75, 80, 85, 90, and 95% by weight of styrene, including any and all ranges and subranges therein.

Examples of polybutadiene rubbers may be any and may include those having a 1,4 configuration, 1,2 configuration. Further the polybutadiene rubbers may contain any amount of those having 1,4 configuration and/or 1,2 configuration.

Examples of polyisoprene rubber may be any and may include those having 1,4 configuration and/or cis-1,4 configuration, and/or 3,4 configuration. The polyisoprene rubber may contain any amount of those having 1,4 configuration and/or cis-1,4 configuration, and/or 3,4 configuration.

Further the rubber polymer or copolymer may be hydrogenated or partially hydrogenated. For example, a styrene butadiene copolymer may be fully hydrogenated or partially hydrogenated. When at least partially hydrogenated, the double bonds of the rubber polymer or copolymer may be more or less than 50% hydrogenated. For example, a styrene butadiene copolymer may contain double bonds that are more or less than 50% hydrogenated, for example, in the butadiene portion of the copolymer. The rubber polymer or copolymer may such that the double bonds are 0, 5, 10, 15, 20, 25, 30, 35, 40, 45, 50, 55, 60, 65, 70, 75, 80, 85, 90, 95 and 100% hydrogenated, including any and all ranges and subranges therein.

The composition of the present invention may also contain pigments and fillers, preferably reinforcing fillers. Examples of such pigments and fillers include inorganic and organic fillers. Examples of fillers include silicon- containing compounds and/or aluminum containing compounds and/or carbon black and/or clay. Examples of silicon containing compounds include silaceous compounds, such as silaceous pigments. Further examples include fumed and/or pyrogenic and/or precipitated silaceous compounds (silica). Further examples of silica include wet silica (hydrated silicic acid), dry silica (anhydrous silicic acid), calcium silicate and aluminum silicate. Among these types of silica, wet silica which most remarkably exhibits the effect of improving the fracture resistance and simultaneously improving the road gripping property on wet roads and the low rolling resistance is more preferable.

Examples of aluminum containing compounds include alumina. Examples of alumina may include fumed and/or precipitated alumina. The above alumina can be any alumina. Examples of alumina include those represented by the following general formula: Al₂O₃.nH₂O; where n represents a number preferably ranging fromf 0 to 3.

The fillers may have any size and shape. The fillers may have any BET surface area, as measure using nitrogen gas. The inorganic filler may have a BET surface area of 50 to 500, for example. The BET surface area of the inorganic filler may be 50, 60, 70, 80, 90, 100., 125, 150, 175, 200, 225, 250, 275, 300, 325, 350, 375, 400, 425, 450, 475, and 500 square meters per gram. The BET method of measuring surface area is described in the Journal of the American Chemical Society, Volume 60, page 304 (1930).

When the filler includes silica, the silica may have any specific surface area. It is preferable that the silica has a specific surface area in the range of 80 to 300 m.²/g and more preferably in the range of 10 to 220 m²/g as measured in accordance with the nitrogen adsorption method. When the specific surface area is 80 m²/g or greater, the sufficient reinforcing effect is exhibited. When the surface area is 300 m.²/g or smaller, no adverse effects on the processability are exhibited. In general, anhydrous silicic acid or hydrated silicic acid in the form of fine powder which is used as the white reinforcing filler of rubber is used. Examples of the silica include commercial products such as "NIPSIL" (manufactured by NIPPON SILICA KOGYO Co., Ltd.) having a specific surface area of 200 m.sup.2/g and "ZEOSIL 1115MP" (manufactured by RHODIA Company) having a specific surface area of 117 m²/g.

When the inorganic filler is silica, various commercially available silicas may be considered for use in this invention such as, for example, only and without limitation, silicas commercially available from PPG Industries under the Hi-Sil trademark such as, for example, those with designations 210, 243, silicas available from Rhone-Poulenc, with designations such as Zeosil 1165MP and silicas available from Degussa AG with designations such as VN2 and VN3. The Rhone-Poulenc Zeosil 1165MP silica is reportedly characterized by having a BET surface area of 160-170 and by a DBP value of 250-290 and by having a substantially spherical shape.

The fillers may also contain metals. Examples of such metals include potassium, sodium, iron, aluminum, calcium, titanium, zirconium, and magnesium. Further, the fillers may halogen elements such as fluorine and/or groups such as NH₄.

Specific examples of the fillers include alumina hydrate (Al.₂O₃H₂O), aluminum hydroxide [Al(OH)₃] such as gibbsite and bayerite, aluminum carbonate [Al₂(CO₃)₂], magnesium hydroxide (Mg(OH)₂), magnesium oxide (MgO), magnesium carbonate [MgCO₃], talc (3MgO.4SiO₂.H₂O), attapulgite (5MgO.8SiO₂.9H₂O), titanium white (TiO₂), titanium black (TiO₂ₙ₋₁), calcium oxide (CaO), calcium hydroxide [Ca(OH)₂], aluminum magnesium oxide (MgO.Al₂O₃), clay (Al₂O₃.2SiO₂), kaolin (Al₂O₃.2SiO₂.2H₂O), pyrophillite (Al₂O₃.4SiO₂.H₂O), (Al₂O₃.4SiO₂.2H₂O), aluminum silicate (Al₂SiO₅, Al₄.3SiO₄.6H₂O), magnesium silicate (Mg₂SiO₄, MgSiO₃ ), calcium silicate (Ca₂SiO.₄), aluminum calcium silicate (Al₂O₃.CaO.2SiO₂), magnesium calcium silicate (CaMgSiO₄), calcium carbonate (CaCO₃), zirconium oxide (ZrO₂), zirconium hydroxide [ZrO(OH)₂.nH₂O], zirconium carbonate [Zr(CO.₃).₂], various types of zeolite, feldspar, mica and montmorillonite.

Among the above inorganic fillers, at least one filler selected from carbon black, silica, various types of alumina and various types of clay is preferable as the filler used in the present invention.

Carbon black is not particularly limited. For example, SRF, GPF, FEF, HAF, ISAF and SAF can be used. Carbon black having an iodine adsorption (IA) of 60 mg/g or greater and a dibutyl phthalate absorption (DBP) of 80 ml/100 g or greater is preferable. The effect of improving the road gripping property and the fracture resistance is increased by using carbon black. HAF, ISAF and SAF providing excellent abrasion resistance are more preferable.

The carbon black may have any outer surface area. The carbon black may have an outer surface area in the range of 130 to 200 m²/g as measured in accordance with the CTAB adsorption method is preferable.

The filler may have any diameter. The filler may have a diameter of 50 µm or smaller, preferably 25 µm or smaller, more preferably 10µm or smaller, most preferably 3 µm or smaller. When the diameter of the inorganic filler is 10µm or smaller, the fracture resistance and the abrasion resistance of the vulcanized rubber composition may be kept improved. The diameter of the filler may be 0.001, 0.01, 0.1, 0.5, 1, 2, 3, 5, 10, 15, 20, 25, 30, 35, 40, 45, and 50 µm, including any and all ranges and subranges therein.

The composition may contain the filler at any amount. The composition contains from 5 to 250 phr, preferably from 10 to 150 phr, more preferably from 40 to 120 phr, most preferably from 60 to 120 phr of the inorganic filler. The composition may contain 5, 10, 15, 20, 25, 30, 35, 40, 45, 50, 60, 70, 80, 90, 100, 110, 120, 130, 140, 150, 160, 170, 180, 190,200,210,220,230,240 and 250 phr, including any and all ranges and subranges therein.

In the present invention, the filler, such as those exemplified above, may be used singly or in combination of two or more.

The composition of the present invention may contain a coupler or coupling agent. In many cases there tends to be a lack of, or at least an insufficient degree of, physical and/or chemical bonding and/or interaction between the filler and the rubber polymer or copolymer mentioned above so as to enable the filler to become a reinforcing filler for the rubber polymer and/or copolymer. While various solutions, treatments and procedures have been devised to overcome such deficiencies, compounds capable of enhancing the degree of physical and/or chemical bonding and/or interaction between the filler and the rubber polymer or copolymer are generally known as coupling agents, or couplers.

Examples of couplers include any coupler that is generally known in the art to the skilled artisan to enhance the degree of physical and/or chemical bonding and/or interaction between the filler and the rubber polymer or copolymer. In the case of a when silica is used as a filler, such coupling agents may generally be composed of a silane which has a constituent component, or moiety, (the silane portion) capable of reacting with the silica surface and, also, a constituent component, or moiety, capable of interacting with the rubber, particularly a sulfur vulcanizable rubber which contains carbon-to-carbon double bonds, or unsaturation. In this manner, then the coupler may act as a connecting bridge between the silica and the rubber and thereby enhances the rubber reinforcement aspect of the silica.

This ideal can be used by the skilled artisan so as to be applied to any filler although the specific chemical groups and chemistry may change according to the selection of the filler.

In one aspect, the silane of the coupling agent apparently forms a bond to the silica surface, possibly through interaction with silanol groups on the silica surface, and the rubber interactive component of the coupling agent apparently interacts with the rubber. Usually the rubber interactive component of the coupler is temperature sensitive and may tend to combine with the rubber during the higher temperature sulfur vulcanization of the rubber composition and after the silane group of the coupler has reacted with the silica. However, partly because of typical temperature sensitivity of the coupler, some degree of interaction may occur between the rubber-interaction component of the coupler and the rubber during initial rubber/silica/coupler mixing stage(s) and, thus, prior to the subsequent vulcanization of the rubber composition.

The rubber-interactive reactive group component of the coupler may be, for example, one or more of groups such as mercapto, amino, vinyl, epoxy, and sulfur groups, preferably a sulfur or mercapto moiety and more preferably sulfur.

Numerous coupling agents may be used to combine silica and rubber polymer or copolymer, such as, for example, silane coupling agents containing a polysulfide component, or structure such as, for example, bis-(trialkoxysilyalkyl) organosilane polysulfides containing from 2 to 8 sulfur atoms in a polysulfide bridge such as, for example, bis-(3-triethoxysilylpropyl)tetrasulfide, trisulfide or disulfide. In the case of the disulfide, if in a high purity form, some free sulfur, or sulfur donor, may desirably be added with the coupler in a rubber mixing step to enhance an overall effect of interaction with the elastomer, or rubber.

The composition of the present invention may also contain other synthetic rubbers, and may further contain various chemicals conventionally used in the rubber industry such as process oils, antioxidants, vulcanizing agents, vulcanization auxiliary agents, vulcanization accelerators and scorch inhibitors.

The composition of the present invention may also contain at least one antioxidant. Representative antioxidants may be, for example, diphenyl-p-phenylenediamine and others, such as, for example, those disclosed in the Vanderbilt Rubber Handbook (1978), pages 344-346.

The composition of the present invention may also contain a wax, preferably a paraffinic wax.

The composition of the present invention may also contain a fatty acid. An example of a fatty acid is a stearic acid.

The composition of the present invention may also contain other additives that traditionally and optionally may be present in rubber containing compositions, including those compositions specifically intended for use in tires. An example of these other additives include sulfur and inorganic oxides, such as zinc oxides.

The composition of the present invention has a Hardness Shore A as measured by DIN 53505 ranging from 50 to 100, preferably from 60 to 85, most preferably from 65 to 80. The Hardness Shore A may be 50, 55, 60, 65, 70, 75, 80, 85, 90, 95, and 100, including any and all ranges and subranges therein.

The composition of the present invention has a DIN Abrasion as measured by ISO 37 method of less than 110mm³, preferably less than 100mm³. The DIN abrasion of the composition may be greater than 50 mm³. The composition may have a DIN abrasion of 50, 60, 70, 80, 85, 90, 91, 92, 93, 94, 95, 96, 97, 98, 99, 100, 101, 102, 105, and 110 mm³, including any and all ranges and subranges therein.

The composition of the present invention has a tensile strength as measured by DIN 53504 of from 10 to 30, preferably from 15 to 25, most preferably from 17 to 21 Mpa. The tensile strength of the composition may be 10, 11, 12, 13, 14, 15, 16, 17, 18, 19, 20, 21, 22, 23, 24, 25, 26, 27, 28, 29, and 30 Mpa, including any and all ranges and subranges therein.

The composition of the present invention has an elongation at break as measured by DIN 53504 of from 200 to 450, preferably from 250 to 425%, most preferably from 300 to 400%. The elongation at break may be 200, 250, 300, 325, 350, 355, 360, 365, 370, 375, 380, 385, 390; 395, 400, 410, 425, and 450%, including any and all ranges and subranges therein.

The composition of the present invention has a Tension at 300% elongation as measured by DIN 53504 of from 10 to 30, preferably from 12 to 20 Mpa. The Tension at 300% elongation may be 10, 11, 12, 13, 14, 15, 16, 17, 18, 19, 20, 21, 22, 23, 24, 25, 26, 27, 28, 29, and 30 Mpa, including any and all ranges and subranges therein.

The composition of the present invention has a tear resistance as neasured by DIN 53507 of greater than 5, preferably greater than 10, most preferably greater than or equal to 15 N/mm. The tear resistance of the composition may be less than 50. Preferably the tear resistance is in the range of from 15 to less than 25 N/mm. The tear resistance may be 5, 10, 11, 12, 13, 14, 15, 16, 17, 18, 19, 20, 21, 22, 23, 24, and 25 N/mm, including any and all ranges and subranges therein.

The composition of the present invention has a tear resistance that is preferably equal or at least 5% greater than that of a composition that does contain the above-mentioned resin or when compared to compositions containing equivalent amounts of Koresin, for example.

The composition of the present invention has any T_{g}. The composition of the present invention has a T_{g} less than 0°C, preferably less than 10°C, most preferably less than 20 °C, and most preferably from -50 °C to -25 °C. The T_{g} may be -50, -45, -40, -35, -30, -25, -20, -15, -10, -5 and -1°C, including any and all ranges and subranges therein.

The composition of the present invention has preferably and/or improved vulcanization when containing the above-mentioned tackifier as compared to those compositions that do not contain the resin of the present invention and/or that of those compositions containing Koresin.

When the composition of the present invention has or improved vulcanization as measure by tanδ described below and in the attached report, the improvement is at least 5% that of those compositions that do not contain the resin of the present invention and/or that of those compositions containing Koresin

The presence of the resin with a rubber polymer and/or copolymer in the composition of the present invention is considered herein to be beneficial because of observed viscoelastic properties of the composition such as complex and storage modulus, loss modulus tanδ and loss compliance at different temperature/frequency/strain as hereinafter generally described.

The properties of complex and storage modulus, loss modulus, tanδ and loss compliance are understood to be generally well known to those having skill in such art. They are hereinafter generally described.

The viscoelastic properties of the present invention when used for a compounded rubber blend, such as for a tire tread application, are considered herein as being important. For example, a tanδ property is the ratio of the viscous contribution to the elastic contribution for a viscoelastic rubber subjected to a dynamic deformation. Such properties are typically represented in a form of a curve(s) as a plot of tanδ values versus temperature.

For a tire with good wet skid resistance, a tread rubber with a tanδ maximization (a maximization of a tanδ value of a tanδ vs temperature curve) is desired in a temperature range, or region, of -45°C. to +10°C. Also, for a tire to have good wet grip, wet skid resistance, it is desired that the composition have a high tanδ between the temperatures of from 0 to 30°C. Further, for a tire to have low resistance to rolling and thus provide better gas mileage as discussed above, it is desired that the composition have a low tanδ between the temperatures of from 60 to 80 °C.

The composition of the present invention has any tanδ from 60 to 80°C. The tanδ from 60 to 80°C is less than 0.1400, preferably less than.0.13, more preferably less than 0.12 and most preferably less than 0.11. For example, at any temperature from 60 to 80°C (including 60, 65, 70, 75, and 80°C), it is preferable that the tanδ of the composition be less than 0.1400, preferably less than 0.13, more preferably less than 0.12 and most preferably less than 0.11. In a preferred embodiment, the composition contains a terpene phenol resin and has a tanδ at 60°C of 0.139 or less, preferably 0.135 or less, more preferably 0.128 or less, most preferably 0.112 or less. In another preferred embodiment, the composition contains a terpene phenol esin and has a tanδ at 70°C of 0.129 or less, preferably 0.125 or less, more preferably 0.120 or less, most preferably 0.115 or less.

The composition of the present invention has any tanδ from 0 to 30°C. The tanδ from 0 to 30°C is greater than 0.16, preferably greater than 0.165, more preferably greater than 0.17 and most preferably greater than 0.175. For example, at any temperature from 0 to 30°C (including about 0, 5, 10, 15, 20, 25 and 30°C), it is preferable that the tanδ of the composition be greater than 0.1600, preferably greater than 0.165, more preferably less than 0.17 and most preferably greater than 0.175. In a preferred embodiment, the composition contains a terpene phenol resin and has a tanδ at 0°C of 0.205 or more, preferably 0.21 or more, more preferably 0.22 or more, most preferably 0.23 or more. In another preferred embodiment, the composition contains a terpene phenol resin and has a tanδ at 20°C of 0.166 or more, preferably 0.169 or more, more preferably 0.171 or more, most preferably 0.174 or more.

The composition of the present invention may have a reduced or increased tanδ at 70°C as compared to a composition not containing any resin according to the present invention and/or to a composition containing Koresin in the place of the resin according to the present invention. However, it is preferable that the composition of the present invention has a tanδ at 70°C that is at least 3%, preferably at least 4%, more preferably at least 5%, most preferably at least 10% less than the tanδ at 70°C of a composition not containing any resin according to the present invention and/or to a composition containing Koresin in the place of the resin according to the present invention.

The composition of the present invention may have a reduced or increased tanδ at 20°C as compared to a composition not containing any resin according to the present invention and/or to a composition containing Koresin in the place of the resin according to the present invention. However, it is preferable that the composition of the present invention has a tanδ at 20°C that is at least 2%, preferably at least 7%, more preferably at least 10%, most preferably at least 15% greater than the tanδ at 20°C of a composition not containing any resin according to the present invention and/or to a composition containing Koresin in the place of the resin according to the present invention.

The composition of the present invention may contain an effective amount of the resin. An effective amount means, for the purposes of herein, an amount of resin that is capable of allowing the composition to obtain any of the above-mentioned preferable performance and physical characteristics. More preferably, an effective amount of resin in the composition allows the composition to attain the above-mentioned abrasion resistance and tanδ values. Further, a composition containing the effective amount of resin, when ncorporated into a tire according to the present invention, bestows upon the tire an increased abrasion resistance, an decreased resistance to rolling, and an increased wet skid resistance or wet grip.

The term "phr" where used herein, and according to conventional practice, refers to parts of a respective material per 100 parts by weight of rubber, or elastomer.

The presence of the tackifier mentioned above with a rubber blend is considered herein to be beneficial because of observed viscoelastic properties of the tread rubber composition such as complex and storage modulus, loss modulustan.delta and loss compliance at different temperature/frequency/strain as hereinafter generally described. The properties of complex and storage modulus, loss modulus, tan.delta and loss compliance are understood to be generally well known to those having skill in such art. They are hereinafter generally described.

The present invention is explained in more detail with the aid of the following embodiment examples.

### EXAMPLES

### Example 1

### Synthesis of TP 115, a Terpene-Phenol Resin for Tire Tread Formulation Testing having 115°C Softening Point

### I. Raw Materials

Alpha pinene, phenol, boron trifluoride, xylene, water, sodium carbonate, and sodium hypophosphite.

### II. Procedure

### II-A. Dehydration of Solvent and Phenol:

(i) Charge 191 g of xylene to a 1.0 Liter Morton flask equipped with an agitator, a Dean-Stark trap attached to a condenser, and a thermocouple probe assembly with an inlet for nitrogen.
(ii) Add 52.5 g of phenol to the xylene
(iii) Fill up the DS trap with xylene.
(iv) Place an electric heating mantle under the Morton flask. Begin heating and bring contents to reflux.
(v) When refluxing begins, any water being removed from the solution will begin collecting at the bottom in the Dean-Stark trap. Allow contents to reflux for 2 hours.

### II-B. Polymerization:

(i) Cool the contents to ambient temperature and charge 1.4-1.5 g of boron trifluoride gas.
(ii) The gas will form a complex with phenol and the solution will acquire a red-brown color.
(iii) Once the gas has been charged, resume a gentle flow of nitrogen through the flask and gradually begin to warm contents to 67°C.
(iv) At 67°C, begin adding drop-wise 197.5 g of alpha pinene.
(v) As the reaction initiates, the temperature in the flask with rise; allow it to rise to 70°C and then maintain the entire polymerization process at 70-72°C.
(vi) Feed the alpha pinene over a period of 2.5 to 3 hours under a nitrogen atmosphere, with agitation, and at 70-72°C.

### II-C. Neutralization of Catalyst:

(i) Quench the reaction by adding an aqueous solution of sodium carbonate (1.5 g) and sodium hypophosphite (0.5 g) in 100mL of water.
**(ii)** Heat contents to 75-80°C and agitate for 10 minutes.
**(iii)** Allow layers to separate and draw off the aqueous layer.
(iv) Add 100 mL of water to the reaction flask again and wash the mixture; repeat steps (ii) and (iii) above.

### II-D. Distillation and Stripping to Softening point:

Transfer the resin solution to a tared 4-neck round bottom flask. Equip the flask with an agitator, a condenser via a 3-way take-off adapter, a thermocouple assembly, and a sparge tube for nitrogen sparging. Insert the sparge tube below the surface of the solution and beging nitrogen sparge (∼ 2000 cc/min.) Begin agitation and start heating using an electric heating mantle. Distill off the solvent between 140 and 170°C, and continue heating to 245°C. When the contents reach 245°C, terminate the sparge and maintain a nitrogen purge. Lower heating mantle and draw out a sample (1-2 mL) of the hot resin for softening point. Obtain a softening point (base s.p.) and resume heating and nitrogen sparge. Continue sparging at 245°C to strip out residual terpene-phenol dimers (residual in the TP resin), and sample as needed for s.p. measurements till target s.p. (112-118°C) is reached. At target s.p., lower mantle, discontinue nitrogen sparge and pour sample out for color, final softening point, and obtain a final resin yield.

A typical synthesis affords a resin with a softening point of 115°C, a neat color of 6-7 Gardner at an overall yield of 85-90%

### Example 2

The following Commercial Products: Koresin (from BASF); Sylvalite RE 104 (from Arizona Chemical Company); SLYVARES TR5147 (from Arizona Chemical Company); SLYVARES TP 105 (from Arizona Chemical Company); and SLYVARES 525 (from Arizona Chemical Company), were tested according the DIN standard listed in the table below (DIN Nos: 53505, 53504, 53507) to test the physical properties thereof (see Table 1 below) when formulated in a rubber composition according to attached report. The tan d (e.g. tanδ) analysis is described in the report attached hereto. The difference between the vulcanization presented below and the vulcanization in the attached report is that the vulcanization was performed under conditions where the 2 mm thick fims have been cured for 17 minutes at 160°C in a hot platen press.

**Table 1. Rubber compositions containing different resins as compared to Koresin (a standard in the art) and their performances and physical characteristics.**

| | | | Koresin | IRE104 | XR5147 | TP105 | S525 |
|---|---|---|---|---|---|---|---|
| Hardness Shore A | DIN 53505 | 53505 | 76 | 75 | 75 | 75 | 74 |
| Tensile strength | DIN 53504 | Mpa | 19.3 | 18.4 | 17.9 | 18.6 | 19 |
| Elongation at break | DIN 53504 | % | 326 | 318 | 314 | 269 | 333 |
| Tension @ 300 % | DIN 53504 | MPa | 17.6 | 17.2 | 16.9 | n.a. | 16.8 |
| Tear resistance | DIN 53507 | N/mm | 15 | 25 | 14 | 13 | 12 |
| | | | | | | | |

| Shear modulus as f(T) : Freq: 1Hz, Amplitude 0.5%, T -100° C to +100° C, RDA II | | | | | | | |
|---|---|---|---|---|---|---|---|
| Tg | | °C | -37.7 | -36.8 | -36.8 | -33.8 | -35.7 |
| tan d @ 20°C | | x exp -01 | 1.46 | 1.43 | 1.53 | 1.49 | 1.58 |
| tan d @ 70 °C | | x exp -01 | 1.03 | 0.996 | 0.995 | 0.92 | 0.96 |

The compositions of Table 1 are exactly set forth as in the formulation of Table 3, except that a BR Buna® CB 24 is eplaced with BR Buna® CB 10.

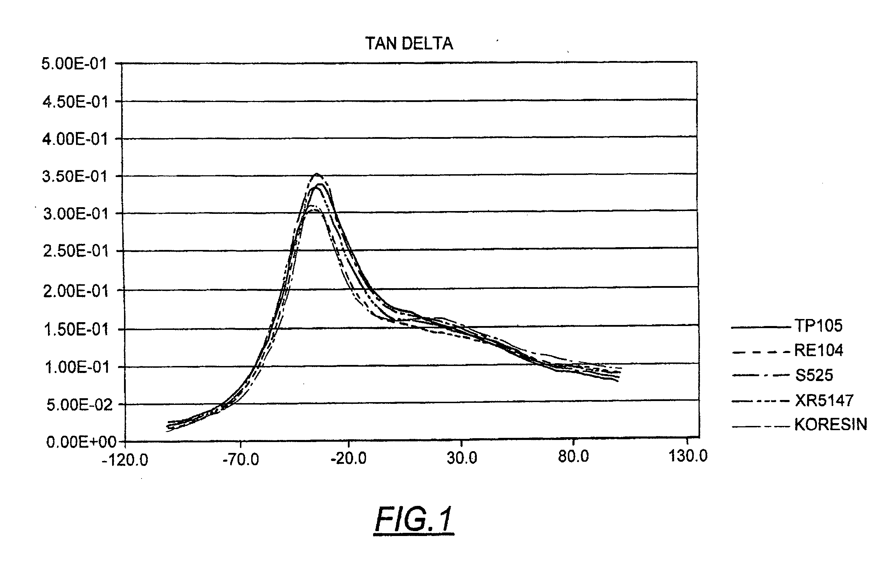

The tan d (or tanδ) reported above comes from the curve in Figure 1 which is a graph of these rubber formulations tan delta as a function of temperature when containing the above-mentioned tackifiers.

### Example 3

Various Terpene Phenol resins have been compared below in a silica tread rubber compound by mechanical and visco-elastic data. When applied in quantities of 4 parts resin on 100 part rubber, the Mooney viscosity, the vulcanization behaviour and most of the mechanical do not change significantly. There are significant differences in the visco-elastic behaviour. TP115 shows the best modification of the rubber compound in increasing damping for braking and reducing damping for rolling resistance. While TP95 increases damping in both relevant temperature zones, TP resins with high OH value such as TP300 and TP2040 HME exhibit higher rolling resistance without improving wet braking whereas TP2019 does not show any effect. Average SP of around 105 to 115 with low OH value seems to be an optimum in regard to dynamic tyre properties while high polarity is detrimental especially combined with high softening point.

In addition, the compound containing TP2040HME shows significantly better abrasion resistance than the other resins and the reference.

Surprisingly it was found that a lower softening point Terpene Phenol resin (Sylvares TP105) was performing similar to an AMS type resin. Terpene phenol resins are known in the industry as tackifier resins, however with much less tackification effect than Alkylphenol Novolaks and are applied in various compounds for sidewall, innerliners, or Apex. They are not known as compound modification resin like aliphatic, naphthenic or aromatic (modified) Hydrocarbon resins from fossil or renewable resources.

In order to verify the effect, a series of terpene phenol resins have been selected and subjected to a comparative study in which a typical silica tread compound was used as matrix and the mechanical data and the visco-elastic data were generated. The resin selection criteria were softening point and polarity expressed by their OH value (See Table.2).

**Table 2. Softening point (SP) and OH value of various resins used in to make the rubber compositions.**

| Resin | SP [deg C] | OH value |
|---|---|---|
| Sylvares ®TP95 | 95 | 40 |
| Sylvares ®TP105 | 105 | 40 |
| Sylvares® TP115 | 115 | 50 |
| Sylvares® TP 300 | 112 | 140 |
| Sylvares® TP 2019 | 125 | 80 |
| Sylvares® TP 2040HME | 125 | 140 |

### Experimental:

**Table 3: Compound compositions used**

| | Reference | Mixtures with Resin |
|---|---|---|
| S-SBR Buna® VSL 5025-0 HM | 70 | 70 |
| BR Buna® CB 24 | 30 | 30 |
| Silica Ultrasil® 7000 GR | 80 | 80 |
| Carbon Black Statex® N 234 | 10 | 10 |
| Silan Si 69® | 8 | 8 |
| Mineral oil TDAE Viva Tec® 500 | 20 | 20 |
| IPPD Vulkanox® 4010 | 1 | 1 |
| 6PPD Vulkanox® 4020 | 2 | 2 |
| TMQ Yulkanox® HS | 0.5 | 0.5 |
| Ozon wax Antilux® 654 | 1 | 1 |
| ZnO Zinkoxid Rotsiegel® | 3 | 3 |
| Stearic acid | 1 | 1 |
| Resin | 0 | 4 |
| Sulfur | 1.5 | 1.5 |
| CBS Vulkacit® CZ | 1.5 | 1.5 |
| DPG Vulkacit® D | 2 | 2 |

### Compound preparation:

The compounds were prepared in 4 steps with a laboratory internal mixer from Werner&Pfleiderer GK 1.5 E with intermeshing geometry and a laboratory 2 roll mill of Berstorff (150x350 mm). The process parameters were as followed:
Step 1 Basic mixture in internal mixer

| | |
|---|---|
| Filling factor | 70% |
| Pre-set temperature | 65°C |
| Rotor speed | 60 rpm |
| Mixing time | 6 min. |

From 0' to 1' polymers (s-SBR +Br)
1' to 3' ²/₃ Silica, ²/₃ silane, ZnO, Stearic acid, Antooxidants, wax, resin
3' to 6' ⅓ Silica, ⅓ mineral oil
Tₘₐₓ (display): approx. 140 °C
Step 2 and Step 3 (Remilling) in internal mixer

| | |
|---|---|
| Filling factor | 70% |
| Pre-set temperature | 65°C |
| Rotor speed | 60 rpm |
| Mixing time | 3 min. |

Tₘₐₓ Step2 (Display): approx. 130 - 135 °C
Tₘₐₓ Step3(Display): approx. 120 - 125 °C
Step 4 Productive step

| | |
|---|---|
| Pre-set temperature | 65°C |
| Cylinder speed | 16:20 rpm |
| Mixing time | 7 min. |

Vulcanisation was carried out at 160 °C up to t*₉₀* in a platen press.

### Test methods

All methods were carried out by standardized methods (see table 4 for names of methods)

In Table. 4 all the relevant data characterising the process-ability (Mooney viscosity and Vulcametry), mechanical data and data concerning the heat build up and the durability (Flexometer) are shown.

**Table 4. All relevant physical and performance data (e.g.Viscosity, vulcanisation, mechanical data and durability data) for compositions containing the resins mentioned above as placed in the composition parameters of Table 3 above.**

| Viscosity | Method | Dim. | Reference | TP 95 | TP105 | TP 115 | TP 300 | TP 2019 | TP 2040 HME |
|---|---|---|---|---|---|---|---|---|---|
| Mooney | ISO289-1 | ML (1+4) | 72.80 | 71.40 | 59,5 | 73.70 | 72.9 | 70.6 | 70.2 |
| | | | | | | | | | |
| Vulcanisation | | | | | | | | | |
| Vulcameter @ 160 °C | | | | | | | | | |
| Torque min | ISO6502 | dNm | 3.06 | 3.21 | 2,46 | 2.98 | 2.99 | 3.04 | 2.89 |
| Torque max | ISO6502 | dNm | 22.97 | 19.93 | 22,57 | 23.68 | 23.27 | 23.27 | 23.55 |
| Δ Torque | ISO6502 | dNm | 19.91 | 23.14 | 20,11 | 20.70 | 20.28 | 20.38 | 20.66 |
| t*₉₀* | ISO6502 | min | 15.11 | 16.16 | 14,50 | 14.58 | 15.8 | 15.01 | 15.53 |
| | | | | | | | | | |

| Mechanical properties | | | Reference | TP 95 | TP105 | TP 115 | TP 300 | TP 2019 | TP 2040 HME |
|---|---|---|---|---|---|---|---|---|---|
| Hardness | ISO868 | Shore A | 69 ± 0.4 | 68 ± 0.4 | 66 ± 0,6 | 68 ± 0.4 | 69 ± 0,5 | 70 ± 0,8 | 70 ± 0,5 |
| Ball Rebound @ RT | ISO4662 | | 32 ± 0.4 | 30 ± 0.3 | 31 ± 0,7 | 30 ± 0.2 | 30 ± 0,4 | 29 ± 0,3 | 29 ± 0,1 |
| Ball Rebound @ 70 °C | ISO4662 | | 52 ± 0.3 | 52 ± 0.6 | 51 ± 1,0 | 53 ± 0.5 | 51 ± 0,7 | 51 ± 0,7 | 50 ± 0,5 |
| Δ Ball rebound | | | 20 | 22 | 20 | 23 | 21 | 22 | 21 |
| Tensile Strength | ISO37 | MPa | 20.0 ± 1.2 | 19.1 ± 1.2 | 19,5 ± 1,1 | 19.5 ± 1.6 | 20.8 ± 1.3 | 19,8 ± 1,2 | 21,1 ± 0,5 |
| Elongation at break | ISO37 | % | 370 ± 18 | 365 ± 18 | 431 ± 18 | 372 ± 24 | 381 ± 21 | 383 ± 18 | 391 ± 9 |
| Tensile Strength @ | | | | | | | | | |
| 50% Elongation | ISO37 | MPa | 1.7 ± 0.0 | 1.7 ± 0.0 | 1,4 ± 0,0 | 1.7 ± 0.0 | 1.7 ± 0.0 | 1.6 ± 0.0 | 1.7 ± 0.0 |
| 100% Elongation | ISO37 | MPa | 3,2 ± 0.0 | 3.2 ± 0.0 | 2,6 ± 0,0 | 3.2 ± 0.1 | 3.3 ± 0.0 | 3.0 ± 0.0 | 3.2 ± 0.1 |
| 200% Elongation | ISO37 | MPa | 8.6 ± 0.1 | 8.3 ± 0.1 | 6,6 ± 0.0 | 8.2 ± 0.1 | 8.7 ± 0.1 | 8.0 ± 0.1 | 8.4 ± 0.3 |
| 300% Elongation | ISO37 | MPa | 15.3 ± 0.1 | 14.8 ± 0.1 | 12,1 ± 0,1 | 14.8 ± 0.2 | 15.4 ± 0.1 | 14.5 ± 0.1 | 16.1 ± 0.4 |
| Tear Resistance | ISO37 | N/mm | 16.1 ± 1,8 | | | 16.5 ± 1.5 1 | 17.1 ± 2.2 | 17.5 ± 2.4 | 18.0 ± 1.6 |
| DIN Abrasion | ISO37 | mm3 | 97 ± 5 | 94 ± 4 | 98 ± 5 | 99 ± 7 | 97 ± 2 | 93 ± 4 | 90 ± 3 |
| Spec. Density | ISO1183-1 | g/cm3 | 1.2049 | 1.2650 | 1.1946 | 1.2063 | 1.2065 | 1.2049 | 1.2065 |
| | | | | | | | | | |

| Flexometer | | | Reference | TP 95 | TP105 | TP 115 | TP 300 | TP 2019 | TP 2040 HME |
|---|---|---|---|---|---|---|---|---|---|
| delta T 25 | ISO4666 | | 28.8 ± 0.4 | 28.5 ± 0.3 | 27,2 ± 0,1 | 28.3 ± 0.3 | 29.1 ± 0.4 | 28.5 ± 0,5 | 28.7 ± 0.4 |
| Max Temperature | ISO4666 | °C | 150.2 ± 0.8 | 149.4 ± 0.3 | 147,9 ± 0,1 | 149.5 ± 0.3 | 150.6 ± 0,7 | 149.1 ± 0.5 | 149.6 ± 0.8 |
| Flow | ISO4666 | % | 2.47 ± 0.23 | 2.17 ± 0.07 | 2,98 ± 0,05 | 2.41 ± 0.22 | 2.63 ±0.26 | 2.50 ± 0.30 | 2.23 ± 0.16 |
| Permanent set | ISO4666 | % | -6.62 ± 0.22 | -6.15 ± 0.15 | -6,96 ± 0,10 | -6.40 ± 0.20 | -6.68 ± 0.28 | -6.51 ± 0.30 | -6.24 ± 0.40 |

### Viscoelastic Properties (DMA Measurements)

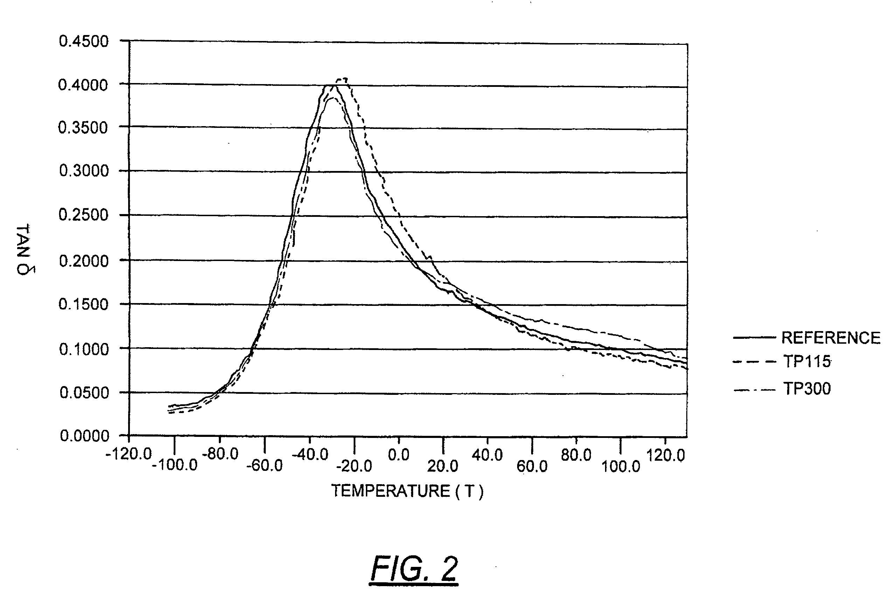

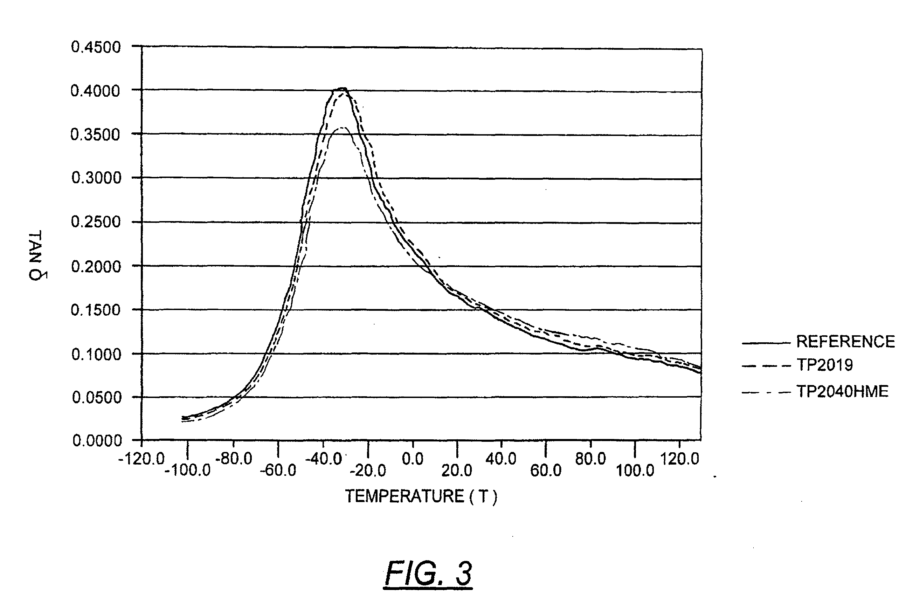

In Figures 2 and 3. the tan δ curves of the low softening point TP resins are compared to the reference not containing resin. In Figures 2 and 3, Terpene phenol with approximately the same softening point, but different OH values are compared. As can be clearly seen, TP95 shifts the tan δ upwards in both most interesting temperature ranges, i.e. 0 to + 30 and 60 to 80 °C., without changing the tan δ peak itself either in the height and its temperature position. The higher damping in the 0 to +20 °C temperature represents better wet braking capability, however the increased damping at the 60 to 80 °C temperature range relates to higher rolling resistance which is highly negative. On the contrary, TP115 generates an ideal change of the tan δ curve, higher the wet braking zone and lower in the rolling resistance zone. Also, the peak shift to slightly temperatures is also of interest. The peak height is related to abrasion and wear resistance. All tan δ curves have approx. the same peak height, there should be no difference in abrasion resistance which is confirmed by the DIN abrasion data. The compound containing TP105 has been excluded for reasons explained earlier The other example of TP105 shown is only added for reference. The data were acquired by earlier work (DIK05A0386) in which another Butadien rubber (Buna CB 10) was used which is now not anymore available. Therefore the curves cannot be directly compared.

For better clarity the relevant values of tan δ are tabulated in Table 5 which are represented in Figures 2 and 3.

**Table 5 tarn δ values at selected temperatures of silica tread compounds containing 4php resin, for comparison data from the resin SA85 which is already commercialized for this application containing compound is included.**

| **Temp (°C)** | **Reference** | **TP 95** | **TP105** | **TP115** | **TP300** | **TP2019** | **TP2040HME** | **SA85** |
|---|---|---|---|---|---|---|---|---|
| 0 | 0.2130 | 0.2346 | 0.2368 | 0.2421 | 0.2119 | 0.2214 | 0.2084 | 0.2388 |
| 20 | 0.1657 | 0.1899 | 0.1973 | 0.1777 | 0.1747 | 0.1750 | 0.1730 | 0.1980 |
| 50 | 0.1263 | 0.1449 | 0.1512 | 0.1249 | 0.1385 | 0.1284 | 0.1367 | 0.1498 |
| 60 | 0.1177 | 0.1354 | 0.1382 | 0.1149 | 0.1309 | 0.1180 | 0.1271 | 0.1351 |
| 70 | 0.1111 | 0.1288 | 0.1284 | 0.1051 | 0.1250 | 0.1112 | 0.1231 | 0.1257 |

As used throughout, ranges are used as a short hand for describing each and every value that is within the range, including all subranges therein.

## Claims

1. A tire tread rubber composition, comprising
at least one polymer selected from the group consisting of a rubber polymer or copolymer; and
at least one resin, wherein the resin is a terpene phenol tackifier resin. having a softening point as determined by Ring & Ball of from 75 to 150 °C and having an OH value of from 5 to 150, wherein the amount of tackifier resin is 0.1 to 9.5 parts of resin per hundred parts of rubber (phr).

2. A tire tread rubber composition as claimed in claim 1, wherein said softening is from 90 to 130°C.

3. A tire tread rubber composition as claimed in claim 1 or 2, wherein said softening point is from 105 to 115 °C.

4. A tire tread rubber composition as claimed in any one of claims 1 to 3 , wherein the said OH value is from 40 to 140.

5. A tire tread rubber composition as claimed in any one of claims 1 to 3, wherein said OH value is from 30 to 50.

6. A tire tread rubber composition as claimed in any preceding claim, wherein the composition further contains at least one filler.

7. A tire tread rubber composition as claimed in claim 6, wherein said filler is selected from the group consisting of silica, alumina, and carbon black.

8. A tire tread rubber composition as claimed in any preceding claim, further comprising a coupling agent.

9. A tire tread rubber composition as claimed in claim 8, wherein said coupling agent comprises a silane.

10. A tire comprising a tread rubber composition of any preceding claim.

## Patentansprüche

1. Eine Reifenprofilkautschukzusammensetzung, umfassend
mindestens ein Polymer ausgewählt aus der Gruppe bestehend aus einem Kautschuk-Polymer oder -Copolymer;
und
mindestens ein Harz, wobei das Harz ein Terpenphenol-Klebrigmacher-Harz ist und einen Erweichungspunkt wie durch Ring & Ball bestimmt von 75 bis 150 °C hat und einen OH-Wert von 5 bis 150 hat, wobei die Menge des Klebrigmacher-Harzes 0,1 bis 9,5 Teile Harz pro Hundert Teile Kautschuk beträgt (phr).

2. Eine Reifenprofilkautschukzusammensetzung gemäß Anspruch 1, wobei der Erweichungspunkt bei 90 bis 130 °C liegt.

3. Eine Reifenprofilkautschukzusammensetzung gemäß einem der Ansprüche 1 oder 2, wobei der Erweichungspunkt bei 105 bis 115 °C liegt.

4. Eine Reifenprofilkautschukzusammensetzung gemäß einem der Ansprüche 1 bis 3, wobei der OH-Wert 40 bis 140 ist.

5. Eine Reifenprofilkautschukzusammensetzung gemäß einem der Ansprüche 1 bis 3, wobei der OH-Wert 30 bis 50 ist.

6. Eine Reifenprofilkautschukzusammensetzung gemäß einem der vorherigen Ansprüche, wobei die Zusammensetzung des Weiteren mindestens einen Füllstoff enthält.

7. Eine Reifenprofilkautschukzusammensetzung gemäß Anspruch 6, wobei der Füllstoff ausgewählt ist aus der Gruppe bestehend aus Kieselerde, Aluminiumoxid und Ruß.

8. Eine Reifenprofilkautschukzusammensetzung gemäß einem der vorherigen Ansprüche, des Weiteren umfassend einen Haftvermittler.

9. Eine Reifenprofilkautschukzusammensetzung gemäß Anspruch 8, wobei der Haftvermittler ein Silan umfasst.

10. Einen Reifen umfassend eine Profilkautschukzusammensetzung gemäß einem der vorherigen Ansprüche.

## Revendications

1. Composition de caoutchouc pour bande de roulement, comprenant
au moins un polymère choisi dans le groupe constitué d'un polymère ou copolymère du caoutchouc ; et
au moins une résine, la résine étant une résine terpène phénol donnant du collant, ayant un point de ramollissement tel que déterminé par Ring & Ball de 75 à 150°C et ayant une valeur d'OH de 5 à 150, la quantité de résine donnant du collant étant de 0,1 à 9,5 parties de résine pour cent parties de caoutchouc (pcc).

2. Composition de caoutchouc pour bande de roulement selon la revendication 1, dans laquelle ledit ramollissement se produit de 90 à 130°C.

3. Composition de caoutchouc pour bande de roulement selon la revendication 1 ou 2, dans laquelle ledit point de ramollissement est de 105 à 115°C.

4. Composition de caoutchouc pour bande de roulement selon l'une quelconque des revendications 1 à 3, dans laquelle ladite valeur d'OH est de 40 à 140.

5. Composition de caoutchouc pour bande de roulement selon l'une quelconque des revendications 1 à 3, dans laquelle ladite valeur d'OH est de 30 à 50.

6. Composition de caoutchouc pour bande de roulement selon l'une quelconque des revendications précédentes, la composition contenant en outre au moins une charge.

7. Composition de caoutchouc pour bande de roulement selon la revendication 6, dans laquelle ladite charge est choisie dans le groupe constitué de silice, d'alumine et de noir de carbone.

8. Composition de caoutchouc pour bande de roulement selon l'une quelconque des revendications précédentes, comprenant en outre un agent de couplage.

9. Composition de caoutchouc pour bande de roulement selon la revendication 8, dans laquelle ledit agent de couplage comprend un silane.

10. Pneumatique comprenant une composition de caoutchouc pour bande de roulement selon l'une quelconque des revendications précédentes.
